# EUROPÄISCHE PATENTSCHRIFT

(11) **EP 2 714 482 B1**
(45) Veröffentlichungstag und Bekanntmachung des Hinweises auf die Patenterteilung: **22.04.2015**
(21) Anmeldenummer: 12706476.4
(22) Anmeldetag: 25.02.2012
(51) Int. Cl.: B60W 20/00, B60W 10/08, B60W 10/26, B60L 11/18, B60K 6/46

(54) **HYBRIDFAHRZEUG SOWIE VERFAHREN ZUM BETREIBEN EINER EINRICHTUNG ZUM AUFLADEN EINER BATTERIE IN EINEM HYBRIDFAHRZEUG**
HYBRID VEHICLE AND METHOD FOR OPERATING A DEVICE FOR CHARGING A BATTERY IN A HYBRID VEHICLE
VÉHICULE HYBRIDE ET PROCÉDÉ PERMETTANT DE FAIRE FONCTIONNER UN DISPOSITIF DE CHARGE DE LA BATTERIE D'UN VÉHICULE HYBRIDE

(30) Priorität: 28.05.2011 DE 102011102766
(43) Veröffentlichungstag der Anmeldung: 09.04.2014
(73) Patentinhaber: Audi AG, 85045 Ingolstadt (DE)
(72) Erfinder: PAPAJEWSKI, Jens, 86697 Unterhausen (DE); HAMACHER, Michael, 86633 Neuburg (DE)
(74) Vertreter: Herbst, Matthias Heinz
(86) Internationale Anmeldenummer: PCT/EP2012/000821
(87) Internationale Veröffentlichungsnummer: WO 2012/163437

(56) Entgegenhaltungen:
- EP-A2- 1 297 982
- DE-A1-102008 047 923
- DE-C1- 4 344 368
- US-A- 5 892 346
- US-A1- 2006 278 449

## Beschreibung

Die Erfindung betrifft ein Hybridfahrzeug nach dem Oberbegriff des Anspruchs 1 sowie ein Verfahren nach dem Oberbegriff des Anspruchs 3. ¶

Ein solches Hybridfahrzeug verfügt über einen elektrischen Antrieb sowie über einen elektrischen Energiespeicher, insbesondere eine Batterie, aus dem der elektrische Antrieb im Betrieb mit Strom gespeist wird. Es gibt ferner eine Einrichtung zum Aufladen des Energiespeichers, wobei eine solche Einrichtung typischerweise eine Brennkraftmaschine mit einem zugeordneten Generator umfasst, wobei der Generator der elektrische Antrieb sein kann, in der Regel aber eine von dem elektrischen Antrieb verschiedene elektrische Maschine ist.

Hybridfahrzeuge weisen in der Regel so genannte Betriebsartenschalter auf, durch deren Betätigung eine Bedienperson auswählen kann, ob das Hybridfahrzeug rein elektrisch fahren soll, ob also ausschließlich elektrische Energie aus dem elektrischen Energiespeicher zum Betreiben des elektrischen Antriebs entnommen werden soll, oder ob ein hybridisches Fahren als Betriebsmodus bevorzugt ist, also ein Betrieb des Hybridfahrzeugs, bei dem gleichzeitig aus dem Energiespeicher elektrische Energie zum Speisen des elektrischen Antriebs entnommen wird als auch durch eine Einrichtung zum Aufladen des Energiespeichers diesem elektrische Energie zugeführt wird.

Aus der DE 100 41 593 B4 ist eine Steuervorrichtung für ein Hybridfahrzeug bekannt, bei der eine Regelung auf die Spannung eines elektrischen Energiespeichers erfolgt. Im Fachgebiet kennt man insbesondere die so genannte SOC-Erhaltung, bei der der Batterieladezustand durch Betrieb eines Range-Extenders erhalten wird. Nachteilig hieran ist, dass der Fahrzeugführer nur sehr schwer aus dem Ladezustand der Batterie, der ihm gegebenenfalls angezeigt wird, die Restreichweite des Kraftfahrzeugs ermitteln kann. Eine gezielte manuelle streckenabhängige Regelung durch den Fahrzeugführer ist nicht möglich.

Die DE 10 2008 047 923 A1 offenbart ein Hybridfahrzeug nach dem Oberbegriff des Anspruchs 1 sowie ein Verfahren nach dem Oberbegriff des Anspruchs 3 und befasst sich mit der Berücksichtigung einer Sollelektroreichweite innerhalb eines Verfahrens zur Optimierung eines Betriebs eines Fahrzeugs. Hierbei wird jeweils vom Fahrstreckenziel ausgegangen, und es erfolgt eine Rückrechnung von diesem Ziel auf einen Zustand, in dem noch eine Sollelektroreichweite bestehen bleibt.

Die DE 10 2008 047 923 A1 zeigt ein Verfahren zum Betreiben eines Hybridfahrzeugs. Es wird eine Soll-Elektroreichweite vorgegeben, bei welcher es sich um die Strecke handelt, die mit dem Hybridfahrzeug bei einem ausschließlichen Betrieb des Elektromotors zurücklegbar ist. Des Weiteren wird eine Fahrstreckenlänge vorgegeben, die vom aktuellen Ort des Fahrzeugs aus noch zurückgelegt werden muss, bis eine den Elektromotor mit Energie speisende Batterie mittels einer fahrzeugexternen Ladeeinrichtung aufgeladen werden kann. Basierend auf der vorgegebenen Soll-Elektroreichweite und der vorgegebenen Fahrstreckenlänge wird das Hybridfahrzeug derart betrieben, dass der Ladezustand der Batterie im Wesentlichen auf einem minimalen Wert liegt, wenn das Fahrzeug die Ladeeinrichtung erreicht hat. Dabei kann für Zonen, in denen ein rein elektrischer Betrieb des Fahrzeugs vorgeschrieben ist, das Fahrzeug derart betrieben werden, dass der Ladezustand beim Eintritt in eine solche Zone ausreichend ist, um die Zone entlang eines vorgegebenen Routenabschnitts rein elektrisch zu durchfahren.

Die EP 1 297 982 A2 zeigt ebenfalls ein Verfahren zum Betreiben eines Hybridfahrzeugs. Es wird ermittelt, wo sich entlang einer vorgegebenen Route ein Routenabschnitt befindet, innerhalb welchem das Fahrzeug ausschließlich rein elektrisch betrieben werden darf. Anschließend wird die Energie ermittelt, welche zum rein elektrischen Zurücklegen des Routenabschnitts erforderlich ist, sowie die dafür notwendige Ladedauer, um einen entsprechend ausreichenden Ladezustand einer Batterie herzustellen. Basierend darauf wird ein Startzeitpunkt zum Beginnen eines Ladevorgangs der Batterie ermittelt und die Batterie ab diesem ermittelten Startzeitpunkt bis zum Erreichen des Routenabschnitts entsprechend aufgeladen.

Die DE 43 44 368 C1 zeigt ein Ladeinformationssystem für ein Hybridfahrzeug. Ein Nutzer kann eine Reichweite angeben, welche er rein elektrisch angetrieben erzielen möchte. Basierend darauf kann das Ladeinformationssystem unter Verwendung einer Ladegrad-Kennlinie einen entsprechend notwendigen Ladegrad einer Batterie und eine Restladezeit zum Erzielen dieses Ladegrads ermitteln.

Es ist die Aufgabe der vorliegenden Erfindung, den Betrieb eines Hybridfahrzeugs auf eine neuartige Weise zu gestalten, durch die die Nachteile des Standes der Technik nicht gegeben sind bzw. insbesondere der Fahrzeugführer die Fahrt mit dem Hybridfahrzeug besser planen kann, ohne an Gestaltungsfreiheit beim Führen des Hybridfahrzeugs zu verlieren.

Die Aufgabe wird in einem Aspekt durch ein Hybridfahrzeug mit dem Merkmal gemäß Patentanspruch 1 und in einem anderen Aspekt durch ein Verfahren zum Betreiben einer Einrichtung zum Aufladen eines elektrischen Energiespeichers in einem Kraftfahrzeug gemäß Patentanspruch 3 gelöst.

Das erfindungsgemäße Hybridfahrzeug ist somit in einem Modus betreibbar, in dem eine Regelung erfolgt, bei der das Regelziel darin besteht, eine nach einem vorbestimmten Kriterium bestimmte Restreichweite zu einem Fahren mit dem elektrischen Antrieb, bei dem die Einrichtung zum Aufladen nicht betrieben wird, ständig unter wiederholtem oder dauerhaftem Betreiben der Einrichtung zum Aufladen nach einem vorbestimmten Kriterium konstant zu halten.

Die Erfindung geht somit davon ab, eine Regelung auf einen Sollladezustand der Batterie durchzuführen. Je nach den äußeren Gegebenheiten kann ein bestimmter Sollladezustand der Batterie für eine unterschiedliche Restreichweite sorgen. Dadurch, dass auf die Restreichweite unmittelbar geregelt wird, lässt sich die Fahrt des Hybridfahrzeugs durch den Fahrzeugführer besser planen. Gegebenenfalls wird ein Datenwert für die Restreichweite dem Fahrzeugführer angegeben, sodass ihm die Bedienung des Hybridfahrzeug in besonderem Maße erleichtert ist.

Der Modus ist erfindungsgemäß durch den Fahrzeugführer selbst wählbar, wobei eine Einrichtung zum Vorgeben eines Wertes für die konstant zu haltende Restreichweite gegeben ist. Dadurch, dass der Fahrzeugführer selbst den Wert für die Restreichweite vorgeben kann, kann er bei laufender Fahrt des Hybridfahrzeugs stets eine solche Reserve an elektrischer Energie vorhalten, dass er nach Beendigung des Modus noch eine Reststrecke gemäß der zuvor konstant gehaltenen Restreichweite fahren kann. Auf diese Weise ist durch den Fahrzeugführer insbesondere ein späteres rein elektrisches Fahren mit dem Hybridfahrzeug planbar; z. B. kann er bei einer Überlandfahrt vorhersehen, dass er in einer späteren Stadtfahrt am Fahrtziel elektrisch fahren möchte. Allein durch Betätigen eines Wahlschalters für den hybridischen oder den rein elektrischen Antrieb wäre aber noch nicht gewährleistet, dass die elektrische Restreichweite in ausreichendem Maße zur Verfügung steht. Wenn aber ein Wert für die Restreichweite vorgebbar ist und dann auf konstante Restreichweite geregelt wird, dann lässt sich diese Restreichweite zu einem späteren Zeitpunkt mehr oder weniger exakt abrufen.

Erfindungsgemäß umfasst die Einrichtung zum Vorgeben eines Werts für die Restreichweite ein Bedienelement, bei dessen Betätigtwerden ein jeweils aktuell ermittelter Wert für die Restreichweite als konstant zu haltender Wert verwendet wird. Beispielsweise bei ständiger Anzeige der jeweils aktuellen Restreichweite für das rein elektrische Fahren kann der Fahrzeugführer irgendwann das Bedienelement betätigen, um die aktuelle Restreichweite gewissermaßen "einzufrieren" bzw. zu konservieren. Das Fahrzeug sorgt dann selbst in seinem eingenommenen Modus dafür, dass die Restreichweite erhalten bleibt.

In an sich bekannter Weise umfasst die Einrichtung zum Aufladen eine Brennkraftmaschine mit einem Generator, einen so genannten Range-Extender.

Das erfindungsgemäße Verfahren ist dadurch gekennzeichnet, dass nach einem (insbesondere nicht ausschließlich auf den Ladezustand des elektrischen Energiespeichers bezogenen) vorbestimmten Kriterium eine Reichweite für das Kraftfahrzeug bei Betrieb des elektrischen Antriebs ohne Betrieb der Einrichtung zum Aufladen ermittelt wird und die Einrichtung zum Aufladen derart betrieben wird, dass diese Reichweite im Rahmen ihrer Angabe anhand diskreter Werte konstant bleibt.

In diesem Aspekt trägt die Erfindung der Tatsache Rechnung, dass eine bis auf den Millimeter berechnete Reichweite kurzfristig schwanken kann. Gibt man die Reichweite aber stufenweise an, zum Beispiel durch diskrete Werte in Abständen von zwischen 1 km bis 10 km und bevorzugt von zwischen 2 km bis 5 km, dann lässt sich durch Betreiben der Einrichtung zum Aufladen des elektrischen Energiespeichers dafür sorgen, dass das zu dem diskreten Wert gehörende Umgebungsintervall nicht verlassen wird, d. h. dass nicht der benachbarte diskrete Wert erreicht wird. Dies ist z. B. ein vorbestimmtes Kriterium, nach dem die Restreichweite konstant gehalten wird.

Zudem wird erfindungsgemäß nach Betätigtwerden eines Bedienelements ein jeweils aktuell ermittelter Wert für die elektrische Restreichweite als konstant zu haltender Wert verwendet.

Das Verfahren kann nach Empfang einer Eingabe durchgeführt werden, durch die ein Wert für die konstant zu haltende Reichweite festgelegt wird, wobei durch die Eingabe ein jeweils nach dem vorbestimmten Kriterium ermittelter aktueller Wert für die Reichweite als konstant zu haltender Wert festgelegt wird. Die oben zum Hybridfahrzeug genannten Vorteile dieser Ausführungsform gelten mutatis mutandis für das Verfahren.

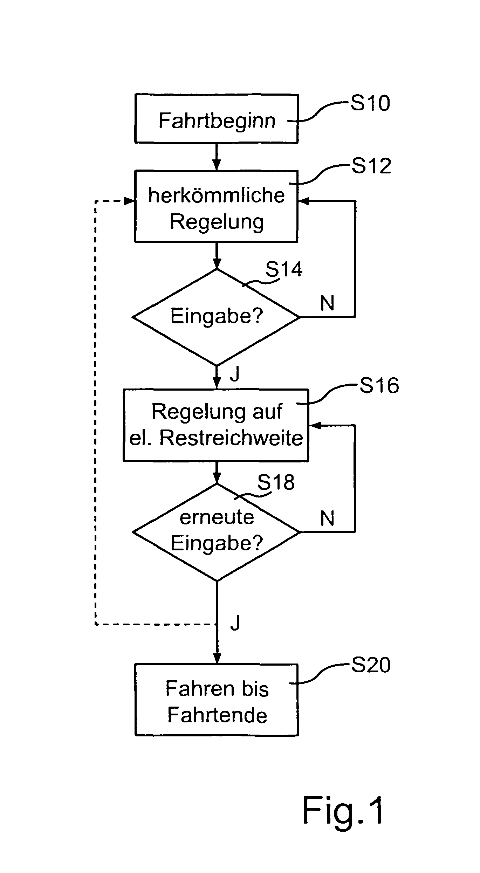

Nachfolgend wird eine bevorzugte Ausführungsform der Erfindung unter Bezug auf die Zeichnung näher beschrieben, in der
- Fig. 1: ein Flussschaubild zur Erläuterung einer Ausführungsform des erfindungsgemäßen Verfahrens ist und

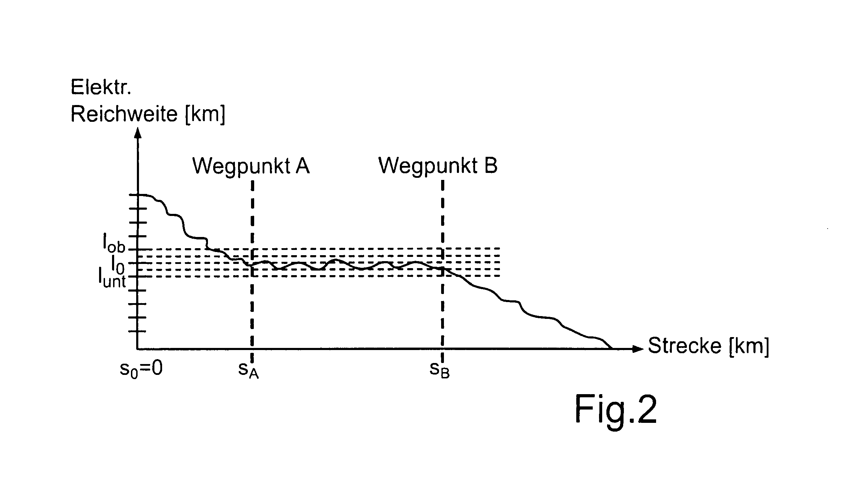

- Fig. 2: einen Graphen der so genannten elektrischen Reichweite in Abhängigkeit von einer Fahrstrecke veranschaulicht, die ein Hybridfahrzeug mit einem Range-Extender durchläuft.

Vorliegend ist davon ausgegangen, dass ein Hybridfahrzeug über einen elektrischen Antrieb verfügt, der aus einer Batterie mit elektrischem Strom gespeist wird. Ein Range-Extender mit einem zugehörigen gesonderten Generator dient dazu, elektrische Energie zu gewinnen, die in der Batterie gespeichert wird.

Typischerweise stellt der Range-Extender nicht die gesamte elektrische Energie bereit, die für das Fahren notwendig ist. Die Batterie wird vielmehr vor Fahrtbeginn an einer externen Ladestation, z. B. an einer einfachen Steckdose, aufgeladen und ist bei Fahrtbeginn maximal geladen. Somit ist am Streckenpunkt S₀ = 0 die so genannte elektrische Reichweite maximal, d. h. die Reichweite, die das Fahrzeug fahren kann, ohne dass der Range-Extender betrieben werden muss.

Nach Fahrtbeginn in Schritt S10 erfolgt ein herkömmlicher Betrieb des Fahrzeugs in Schritt S12, zum Beispiel eine Regelung auf den Batterieladezustand SOC, ein rein elektrisches Verfahren o. ä. Es ist vorliegend davon ausgegangen, dass sich die elektrische Reichweite dann bis zum Wegpunkt A nach Durchlaufen der Strecke S_{A} immer weiter verringert. Während der Fahrt wird in Schritt S14 geprüft, ob eine bestimmte Taste durch den Fahrzeugführer betätigt wurde. Solange dies nicht der Fall ist, erfolgt die herkömmliche Fahrt in Schritt S12 weiter.

Vorliegend werde am Wegpunkt A nach Durchlaufen der Strecke S_{A} dieses Betätigungselement durch den Fahrzeugführer betätigt. Dies hat die Folge, dass nachfolgend in Schritt S16 auf die elektrische Restreichweite geregelt wird, und zwar wird diese soweit als möglich konstant gehalten. "Soweit als möglich" bedeutet vorliegend, dass die Schwankungen in der elektrischen Restreichweite lediglich so klein sind, dass eine diskrete Einteilung der Werte für die elektrische Reichweite diese Schwankungen noch nicht erfassen kann. Beispielsweise wird die elektrische Reichweite auf dem Wert von Iₒ geregelt und schwankt lediglich so, dass nicht einmal die Hälfte des Intervalls bis zum nächstmöglichen Messwert I_{ob} oder Iᵤₙₜ erreicht wird.

Für die Angabe der Restreichweite genügt es, relativ großzügige Intervalle zu wählen. Beispielsweise kann die Restreichweite in Intervallen von 5 km angegeben werden, bei Zahlenwerten unterhalb von 20 km möglicherweise in Schritten von 2 km. Ist beispielsweise im oben genannten Beispiel der Wert l₀ = 25 km, so bedeutet das Konstanthalten dieses Werts bei einer Diskretisierung von 5 km (also bei lᵤₙₜ = 20 km und l_{ob} = 30 km), dass die Restreichweite nach einem vorbestimmten Kriterium, nämlich innerhalb des Intervalls von beispielsweise 22 km bis 28 km, konstant gehalten wird.

In Schritt S18 wird geprüft, ob eine erneute Eingabe erfolgte. Solange dies nicht der Fall ist, erfolgt nach wie vor die Regelung auf die elektrische Restreichweite. Nach Durchfahren der Strecke S_{B}, also bei Erreichen des Wegpunkts B, soll vorliegend eine solche erneute Eingabe in Schritt S18 erfasst werden. Dementsprechend erfolgt in Schritt S20 ein Fahren rein elektrisch, bis das Fahrtende erzielt ist, die genannte elektrische Restreichweite l₀ wird also abgefahren. Alternativ kann zum Schritt S12 zurückgekehrt werden und die herkömmliche Regelung wieder durchgeführt werden, bis erneut in Schritt S14 eine Eingabe erfolgt.

Der Fahrzeugführer hat durch das erfindungsgemäße Verfahren die Möglichkeit, bei Erkennen, dass nur noch eine bestimmte elektrische Restreichweite l₀ vorhanden ist, diese gewissermaßen "einzufrieren". Er kann dann (vorausgesetzt, dass ausreichend viel Kraftstoffe zum Betrieb des Range-Extenders vorhanden ist) diese elektrische Restreichweite vorrätig halten, indem der Range-Extender in einem Gebiet betrieben wird, wo es der Fahrzeugführer erlauben möchte, um zu einem späteren Zeitpunkt nach Erreichen des Wegpunkts B die Reststrecke z. B. rein elektrisch zu fahren, beispielsweise in einer Umweltzone, in der der Range-Extender nicht betrieben werden soll.

Im Unterschied zu der herkömmlichen Regelung auf einen festen Ladezustand der Batterie wird vorliegend auf die elektrische Restreichweite geregelt. Die elektrische Restreichweite ist zwar vom Ladezustand der Batterie abhängig, in sie geht aber zum Beispiel auch die aktuelle Fahrzeuggeschwindigkeit ein, indirekt über den Betrieb des Range-Extenders auch der Tankinhalt des Kraftstofftanks, und insbesondere ist die elektrische Restreichweite auch von der Antriebsleistung des elektrischen Antriebs sowie der von den Nebenverbrauchern im Kraftfahrzeug verbrauchten Leistung abhängig. Bei einer Änderung einer der Größen kann sich die elektrische Restreichweite ändern, ohne dass sich der Ladezustand der Batterie ändert. Um die elektrische Restreichweite konstant zu halten ist also ggf. der Ladezustand der Batterie anzupassen. Beispielsweise kann nach einer zeitlang des Fahrens auf ebener Strecke bei einer Bergauffahrt die vom Antrieb verbrauchte Leistung ansteigen, wodurch sich an sich die elektrische Restreichweite verringern würde. Durch Zuschaltung des Range-Extenders bei Bergauffahrt zumindest nach einem vorbestimmten Zeitraum wird dann dafür gesorgt, dass der für eine dauerhafte Bergauffahrt nicht für die bisher konstant gehaltene elektrische Restreichweite ausreichende Ladezustand zu einem höheren Ladezustand hin geändert wird.

Die Berechnung der Restreichweite erfolgt in an sich bekannter Weise nach im Stand der Technik bekannten Algorithmen. In die Restreichweitenberechnung geht ein, auf welche Weise zumindest ein Teil der bisher zurückgelegten Strecke zurückgelegt wurde, also unter Verbrauch von wie viel Energie, und dies wird extrapoliert. Bei einer Änderung im Verbrauch werden höhere Verbräuche schneller berücksichtigt als niedrige. Zu einer bestimmten Geschwindigkeit des Fahrzeugs werden so genannte mittlere Profile für das Fahrzeug verwendet, um die Restreichweite abzuschätzen.

Die vorliegende Erfindung ermöglicht es dem Fahrzeugführer, präziser zu planen, wann er rein elektrisch fahren möchte. Durch das Aufrechterhalten einer bestimmten Kilometerzahl für die Restreichweite ist dem Fahrzeugführer eine bessere Planung ermöglicht als bei Konstanthaltung des Ladezustands der Batterie.

## Patentansprüche

1. Hybridfahrzeug mit einem elektrischen Antrieb, welcher aus einem elektrischen Energiespeicher mit Strom speisbar ist, und mit einer Einrichtung zum Aufladen des Energiespeichers, wobei das Hybridfahrzeug in einem Modus betreibbar ist, in der eine Regelung (S16) erfolgt, bei der das Regelziel darin besteht, eine nach einem vorbestimmten Kriterium bestimmte elektrische Restreichweite (l₀) zu einem Fahren mit dem elektrischen Antrieb, bei dem die Einrichtung zum Aufladen nicht betrieben wird, ständig unter wiederholtem oder dauerhaftem Betreiben der Einrichtung zum Aufladen nach einem vorbestimmten Kriterium konstant zu halten,
**gekennzeichnet durch**
eine Einrichtung zum Vorgeben eines Wertes für die konstant zu haltende elektrische Restreichweite, welche ein Bedienelement umfasst, bei dessen Betätigtwerden ein jeweils aktuell ermittelter Wert (l₀) für die elektrische Restreichweite als konstant zu haltender Wert verwendet wird.

2. Hybridfahrzeug nach Anspruch 1,
**dadurch gekennzeichnet, dass**
die Einrichtung zum Aufladen eine Brennkraftmaschine mit einem Generator umfasst.

3. Verfahren zum Betreiben einer Einrichtung zum Aufladen eines elektrischen Energiespeichers in einem Kraftfahrzeug, in dem dieser Energiespeicher zum Speisen eines elektrischen Antriebs eingesetzt wird, wobei nach einem vorbestimmten Kriterium eine elektrische Reichweite für das Kraftfahrzeug bei Betrieb des elektrischen Antriebs ohne Betrieb der Einrichtung zum Aufladen ermittelt wird und die Einrichtung zum Aufladen derart betrieben wird, dass die elektrische Reichweite im Rahmen einer Vorgabe anhand diskreter Werte konstant bleibt,
**dadurch gekennzeichnet, dass**
nach Betätigtwerden eines Bedienelements ein jeweils aktuell ermittelter Wert (l₀) für die elektrische Restreichweite als konstant zu haltender Wert verwendet wird.

4. Verfahren nach Anspruch 3,
**dadurch gekennzeichnet, dass**
die diskreten Werte in Abständen von zwischen 1 km bis 10 km und bevorzugt von zwischen 2 km bis 5 km festgelegt werden.

## Claims

1. Hybrid vehicle comprising an electric drive which can be supplied with current from an electric energy storage device, and comprising a device for charging the energy storage device, wherein the hybrid vehicle is capable of being operated in a mode in which regulation (S16) takes place, the objective of the regulation being to continuously hold constant a remaining electrical range (l₀) determined according to a predetermined criterion for driving with the electric drive, where the charging device is not operated, by repeated or long-lasting operation of the charging device according to a predetermined criterion,
**characterised by**
a device for determining a value for the remaining electrical range that is to be held constant, said device comprising a control element the actuation of which causes a currently determined value (l₀) to be used for the remaining electrical range as the value to be held constant.

2. Hybrid vehicle according to claim 1, **characterised in that** the charging device comprises an internal combustion engine with a generator.

3. Method for operating a device for charging an electric energy storage device in a motor vehicle, wherein said energy storage device is used to supply an electric drive, wherein a remaining electrical range for the vehicle using the electric drive without operating the charging device is determined according to a predetermined criterion and the charging device is operated such that the electrical range remains constant within a predefined range based on discrete values, **characterised in that**, after actuation of a control element, a currently determined value (l₀) for the remaining electrical range is used as the value to be kept constant.

4. Method according to claim 3, **characterised in that** the discrete values are fixed at intervals of between 1 km and 10 km and preferably between 2 km and 5 km.

## Revendications

1. Véhicule hybride avec un entraînement électrique, qui peut être alimenté en courant à partir d'un accumulateur d'énergie électrique, et avec un dispositif de charge de l'accumulateur d'énergie, le véhicule hybride pouvant fonctionner dans un mode dans lequel est effectuée une régulation (S16) au cours de laquelle l'objectif de régulation consiste en ce qu'une autonomie restante électrique (l₀), définie d'après un critère prédéfini pour un trajet avec l'entraînement électrique au cours duquel on ne fait pas fonctionner le dispositif de charge, soit maintenue continuellement constante avec un fonctionnement répété ou permanent du dispositif de charge d'après un critère prédéfini,
**caractérisé par**
un dispositif, servant à spécifier une valeur pour l'autonomie restante électrique à maintenir constante, qui comprend un élément de commande avec l'actionnement duquel une valeur (l₀) déterminée à chaque fois de manière actuelle est employée pour l'autonomie restante électrique en tant que valeur à maintenir constante.

2. Véhicule hybride selon la revendication 1,
**caractérisé en ce que**
le dispositif de charge comprend un moteur à combustion interne avec un générateur.

3. Procédé permettant de faire fonctionner un dispositif de charge d'un accumulateur d'énergie électrique dans un véhicule automobile dans lequel cet accumulateur d'énergie est mis en oeuvre pour alimenter un entraînement électrique,
une autonomie électrique pour le véhicule automobile en cas de fonctionnement de l'entraînement électrique sans le fonctionnement du dispositif de charge étant déterminée d'après un critère prédéfini et le dispositif de charge étant employé d'une manière telle que l'autonomie électrique reste constante dans le cadre d'une spécification à l'aide de valeurs discrètes,
**caractérisé en ce que**
après l'actionnement d'un élément de commande, une valeur déterminée à chaque fois de manière actuelle (I₀) pour l'autonomie électrique restante est employée en tant que valeur à maintenir constante.

4. Procédé selon la revendication 3,
**caractérisé en ce que**
les valeurs discrètes sont fixées selon des intervalles de 1 km à 10 km et de préférence de 2 km à 5 km.
